# EUROPEAN PATENT APPLICATION

(11) **EP 4 782 788 A1**
(43) Date of publication of application: **29.07.2026**
(21) Application number: 25290004.8
(22) Date of filing: 24.01.2025
(51) Int. Cl.: G01C 21/00

(54) **MAP GENERATION APPARATUS**

(71) Applicant: Astemo, Ltd., Tokyo 100-0004 (JP)
(72) Inventor: Nguyen, Quan, 06560 Valbonne (FR); Ahrabian, Alireza, London, EC2Y 5AJ (GB)
(74) Representative: MERH-IP Matias Erny Reichl Hoffmann Patentanwälte PartG mbB

(57) **Abstract**

A map generation apparatus, in particular for generating a 3D HD-map, comprising: a surrounding recording sensor device configured to obtain recorded surrounding data, the surrounding recording sensor device including recording units including at least one camera unit configured to record image data as recorded surrounding data and further including at least one of a radar unit, a camera unit, and/or a lidar unit, an object detection unit configured to receive recorded image data and to perform object detection in the image data to detect objects, an environment data calibration unit configured to receive the recorded surrounding data of the different recording units for a time point t and to transform the received recorded surrounding data of a time point t of the different recording units to a common coordinate system, a matching unit.

## Description

The present subject matter relates to a device and method for automatedly generating high-definition (HD) 3-dimensional (3D) maps precisely and more efficiently.

The generation of HD-maps which are used, for example, in the context of travelling and which also have an important role in self-driving of automotives and other vehicles is cumbersome and the work is done manually. Especially, the labelling/annotating of maps is time-consuming and not very efficient, because it is done part by part by a human operator of a software program. This takes time, is difficult to scale and expensive as well as prone to human-errors during the annotating work. Further, these maps are usually created to show a flat shape, i.e. 2D, which is not necessarily in accordance with the real-life situation.

Fig. 1 shows an example process of a prior art manual 2D HD-map generation starting at a very simplified model of a part of map which mainly includes lane boundaries of a street in a map cell and a center line of the street(s) (very left schematic, (a)). Then, after the annotation work, multiple parts, such as lane arrows, cross walks, traffic lights, stop lines etc. have been added manually in a 2D-way. This is shown in the right schematic of the 2D HD-map (Fig. 1(b)).

Therefore, there is a need for having at hand a more efficient and precise way option to generated HD-maps, preferably even in 3D for better reflecting real-life structures, e.g. bridges or the like.

The above problems are overcome by the solution as presented in the present disclosure and as claimed by the appended claims.

One aspect of the present disclosure relates to a map generation apparatus, in particular for generating a 3D HD-map, comprising:
- a surrounding recording sensor device configured to obtain recorded surrounding data, the surrounding recording sensor device including recording units including at least one camera unit configured to record image data as recorded surrounding data and further including at least one of:
   - at least one radar unit configured to record radar data of the surrounding as recorded surrounding data, at least one camera unit configured to record 3D point cloud data of the surrounding as recorded surrounding data, and/or at least one lidar unit configured to record 3D point cloud data of the surrounding as recorded surrounding data,
- an object detection unit configured to receive recorded image data and to perform object detection in the image data to detect objects (data),
- an environment data calibration unit configured to receive the recorded surrounding data of the different recording units for a time point t and to transform the received recorded surrounding data of a time point t of the different recording units to a common coordinate system,
- a matching unit configured to match detected objects with the recorded surrounding data of a time point t of the different recording units in the common coordinate system, preferably thereby creating/generating an annotated 3D HD map.

In regard of the above it can be noted that camera unit(s) may include all kind of camera units, such a mono cameras, stereo cameras, etc. Generally, a camera or camera unit may include as image taking component, one or more charge-coupled device image sensor or other apt imaging sensors. Lidar ("light detection and ranging") and Radar ("radio detection and ranging") units are known in the art and can be used accordingly. The conversion of image data into 3D point cloud data may include a transformation processing as also known in the art and this can be performed in the camera unit itself and/or in any computing unit connected wireless and/or wired.

It is to be noted that preferably the 3D point cloud data will be used for matching thereto the detected objects such as to generate the annotated map. The lidar data are optional if image data are not used/usable for creating 3D point cloud data, the radar data are optional for detecting, in particular, non-static objects among the detected objects.

Depending on the above configuration of the surrounding recording sensor device which can include different configurations of recoding sensor devices, such as camera units only, a camera unit and a lidar unit, a camera unit and a radar unit and a lidar unit, and other configurations of recording sensor devices, the above environment data calibration unit receives different kind of recorded surrounding data, i.e. e.g. image data and 3D point cloud data, e.g. image data, 3D point cloud data and radar data and the like. All of such different data types are received depending on which different kinds/types of recording sensor devices are used.

The such received recorded surrounding data from the (different) recording sensor devices are repeatedly received, preferably in predefined time regular or irregular intervals, and transformed to a common coordinate system, e.g. the World coordinate system where the received recorded surrounding data are each provided in a local coordinate system, e.g. from the camera unit, the lidar unit and/or the radar unit.

Further, the matching unit then in particular may perform a matching of detected objects, which are detected from/in/within the image data; received with 3D point cloud data, both at the same time point and both in the common coordinate system for reasons of accuracy. Such matching brings about an annotated 3D point cloud map which can then be output by an optional annotated map generation unit as an annotated map. Preferably, the matching unit and the annotated map generation unit can be a single unit, which in particular perform the matching and outputting. If radar data are present they further can be used to remove non-static objects from the detected object (data).

The above brings the technical advantage that data can be recorded "on the fly", i.e. such data can be collected by any moving object which has the herein-claimed apparatus installed. By moving through the object's surroundings, e.g. a car, a train, a bike, etc., the apparatus with its recording sensor devices takes up information about the vicinity/surroundings/environment and the apparatus automatedly processes the recorded data to build a 3D HD annotated map without manual interaction necessary and, at least already therefore, with high precision.

Preferably, the map generation apparatus can include a configuration where the recording units include at least two camera units, the one camera unit configured to record image data as recorded surrounding data in a local camera unit coordinate system and the other camera unit configured to record 3D point cloud data in a local camera unit coordinate system as recorded surrounding data.

Preferably, the map generation apparatus can include a configuration where the recording units include at least one camera unit configured to record image data as recorded surrounding data in a local camera unit coordinate system and at least one lidar unit configured to record 3D point cloud data in a local lidar unit coordinate system as recorded surrounding data.

Preferably, the map generation apparatus can include a configuration where the recording units further include at least one radar unit configured to record radar data of the surrounding in a local radar unit coordinate system as recorded surrounding data.

Preferably, the matching unit compares the detected objects with the recorded surrounding data from other recording units in the common coordinate system. In a preferable option, the matching unit compares the data with the detected objects with surrounding data of the radar unit - which means in other words, the matching unit can also compare detected objects at time point t in the common coordinate system with radar data at time point t in the common coordinate system, and may then remove detected objects which are not static from the detected objects (data). Such data processing of the detection and removal may be performed by known-in-the-art data processing methods.

Furthermore, preferably, the matching unit matches the (preferably only static) detected objects at time point t in the common coordinate system with a 3D point cloud map, as a matching of detected objects with recorded surrounding data of a time point t of different recording units in the common coordinate system.

Preferably, a 3D point cloud map is generated by a 3D point cloud map generation unit of the map generation apparatus which uses 3D point cloud data at the time point t, at the time point t-1 and, preferably in addition, localization data to perform calculation of finding a pose to match the 3D point cloud data with a (preferably prestored) global 3D map. Finding the pose can be computed/performed based on/by using known methods. The localization data are preferably odometry data stemming from a vehicle or the moving body to which the apparatus is mounted.

Preferably, the data processing and the like performed in the herein-disclosed apparatus can be performed by processors (CPUs, GPUs, ASICs, etc.) of the respective units and or by a general processor(s) of the apparatus. Even further, the data processing may also be performed remotely on a server or the like, and in such case the data to be processed is sent to the server by means preferably wireless communication between the apparatus and the server(s).

Preferably, the object detection unit includes a trained artificial intelligence model trained for detecting objects in image data.

Preferably, the environment data calibration unit configured to receive the recorded surrounding data from the different recording units of the surrounding recording sensor device (different units means depending on which units are present in the configuration, and preferably from all units present) repeatedly and for a same time point t, and
the map generation apparatus further comprising a time synchronization unit configured to synchronize the triggering of the different recording units of the surrounding recording sensor device.

According to another aspect, the disclosure includes also a system including the map generation apparatus according to at least one of the preceding claims and a moving body, preferably a vehicle, wherein the map generation apparatus being mounted on/In/at the moving body.

According to another aspect, the disclosure includes a (computer-implemented) method for generating a map, in particular a 3D HD-map, comprising the steps of:
- obtaining an image data at a time point t by a camera unit,
- obtaining 3D point cloud data at the time point t by a camera unit and/or a lidar unit,
- preferably, obtaining radar data at the time point t by a radar unit,
- performing a detection processing for detecting an object in the obtained image data,
- performing transformation processing to transform the image data, the 3D point cloud data and, if available, the radar data from a local coordinate system into a common coordinate system,
- matching the detected objects with 3D point cloud data, preferably a 3D point cloud map, in the common coordinate system,
- (thereby) generating a 3D annotated map.

Preferably, wherein in a further step the radar data in the common coordinate system and detected objects are compared and if a detected object is found to be not static, it is removed from the detected objects. Such detection of static objects
preferably uses the information stemming from radar data, and generally known techniques are usable for such detection and removal of static objects from the objected detection data.

Preferably, a 3D point cloud map is generated by matching 3D point cloud data of a time point t and of a previous time point, such as t-1. The 3D point cloud map is preferably created by finding a pose transform that matches point cloud at time t with a generally available, and e.g. prestored/stored in a memory of the apparatus or a connected server, global 3D map.

Preferably, the time point(s) to repeatedly obtain image data, lidar data, and/or radar data is synchronized by a trigger signal issued by a time synchronization unit, wherein very preferably the time synchronization unit is the same unit/device for all recording units so that all recording units are triggered by the same device, and hence trigger signal, to ensure synchroneity.

Preferably, the (generated) 3D annotated map is uploaded to a remote server so that it can be made available to other users, e.g. by way of wireless communication to other vehicles using navigation maps or the like.

Preferably, the method and/or preferably parts thereof may be performed by the apparatus as described in the aspect relating to the map generation apparatus above.

Another aspect may further relate to a computer program product storable in a memory comprising instructions which, when carried out by a computer, cause the computer to perform the method and/or preferably parts thereof as described before.

As noted, the present disclosure provides technical benefits, and especially in view of automatedly recording data while moving and using such data in an automated processing to generate highly precise 3D annotated/HD maps.

### Brief description of the drawings

Fig. 1 shows an example of a prior art generation process of a part of a 2D map;
Fig. 2 schematically shows a map generation apparatus according to the present disclosure;
Fig. 3 schematically shows a data flow in a part of the map generation apparatus according to the present disclosure according to a preferred option;
Fig. 4 schematically shows a data flow in a part of the map generation apparatus according to the present disclosure according to a preferred option;
Fig. 5 schematically shows a data flow in a part of the map generation apparatus according to the present disclosure;
Fig. 6 schematically shows a data flow in a part of the map generation apparatus according to the present disclosure;
Fig. 7 schematically shows a possible implementation example of a time triggering according to the present disclosure;
Fig. 8 schematically shows the data flow between a server, other vehicles and the uploading of a generated map.

### Examples of the disclosed subject matter

Fig.1 shows a state of the art (prior art) process of creating an annotated map where the result is an annotated 2D map and the annotations are performed by a human operator of a computer, i.e. by hand/graphical reworking of the data.

Contrary to such processing, the present disclosure makes use of an apparatus 100 which performs the generation of a 3D annotated map automatedly.

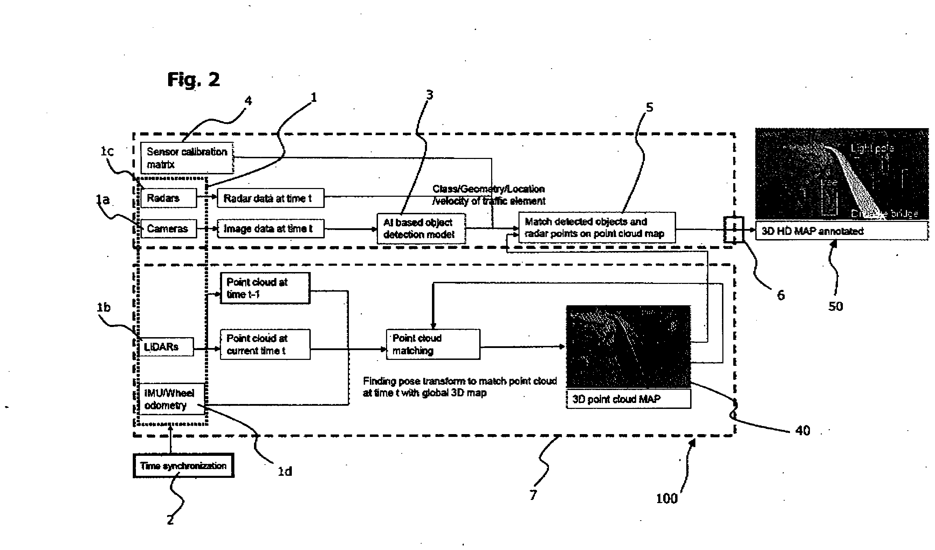

Figure 2 schematically shows some components of a map generation apparatus 100 according to the present disclosure. In the upper part of the Figure 2, components are shown which are mostly involved with the processing of image data and radar data, the latter if available, which are provided by one or more radar units 1c and/or one or more camera units 1a. These units 1a, 1c take up information repeatedly, such as image data and radar data, from the environment/vicinity/surroundings of the map generation apparatus 100 (shortly: "apparatus"). The repeated data acquisition might be performed in regular or irregular intervals, which can be set fixedly, such as a programmed interval, or they can be set by a user of the apparatus 100 before the use. The apparatus 100 itself can be installed/mounted at different moving bodies, preferably vehicles.

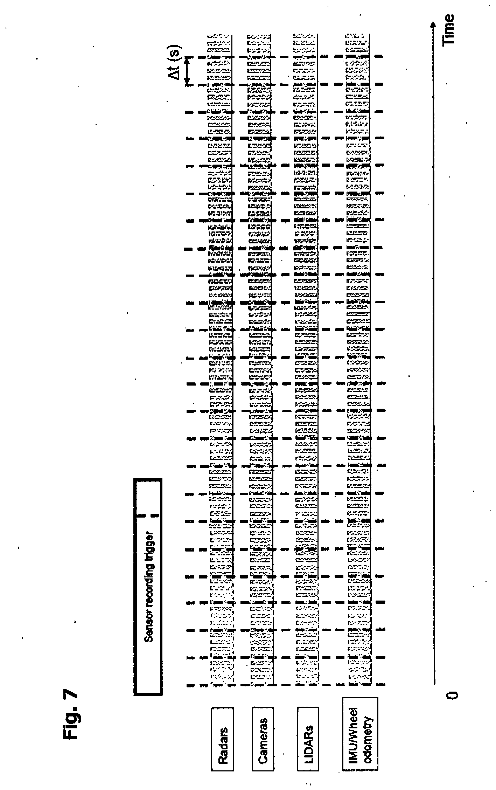

The trigger signal for the repeated data acquisition can be provided by a time synchronization unit 2 which triggers at the same time all available recording units 1a to 1c and/or the odometry unit 1d. Such commonly triggered process is shown, as a possible example, in Fig. 7. This Figure 7 shows that all recording devices 1a to 1c including the odometry unit 1d are triggered at identical time intervals, e.g. as shown dt(s), so that the data taken by each of the recording units stems reliably from the same time point.

Fig. 2 further shows radar data and.image data, in the present Figure for example at a time point t; it is clear that such processing is repeatedly performed at further time points t+1, t+2, etc. and that the Fig. 2 shows an example procedure at an example time point t. The image data is provided to another unit of the apparatus 100, optionally said other unit could be part of an external system in which case the image data would be transmitted, e.g. wireless, to the other unit processed and returned to the apparatus. In any case, said other unit is an object detection unit 3 which preferably employs a trained machine learning model (ML)/artificial intelligence (AI) model for performing object detection in the image data. By this, the class, geometry, location, and/or other information of one or more objects can be extracted from the image data by way of the object detection unit 3. For example, extraction/detection may concern any part of a street, constructions or buildings at street-sides, other objects, such as trees, etc.

Further, if radar data is available, the radar data may be used to also find whether a detected objected is static or not static.

The data of the different recording units 1a - 1c of the surrounding recording sensor device 1 subsequently is transformed by using a calibration matrix or corresponding methods for transforming the coordinate systems of each recording unit, which are local coordinate systems, into a common coordinate system, e.g. world coordinates.

The above processed data transformed to be in a common coordinate system is then input to another unit, which is a matching unit 5. The function thereof will be described further below.

As further shown in Figure 2, the 3D point cloud map generation unit 7 provides a 3D point cloud map 40 to the matching unit 5. The generation/creating of the 3D point cloud map 40 is preferably carried out by using LiDAR-based point cloud data as shown in Fig. 2 and/or camera-based image data which are provided as point cloud data. The outline of this processing is shown in the lower section of Fig. 2 where the broken-line box Indicates the processing (while the 3D point cloud map generation unit 7 may include at least all of the sub-units as shown in said box in Fig. 2, it may also include less, e.g. the LidAR and Odometry unit 1d may rather be separated locally, but connected communicably by way of wires or wireless communication means).

The procedure of generating the 3D point cloud map 40, as noted, uses point cloud data and it uses point cloud data from two different points in time, e.g. t and t-1, i.e. e.g. actual time and a previous time, such as one frame or time trigger before. Also Odometry data from the odometry unit 1d is merged to the point cloud data so that a pose transform can be found to match point cloud at time t with a global 3D map. The result of this process, which is repeatedly performed as shown by the arrows is shown on the right side in the lower box of Fig. 2, i.e. a 3D point cloud map 40.

The 3D point cloud map 40 as shown in Fig. 2 is input into the matching unit 5 so that the matching unit 5 has the detected objects data and the 3D point cloud map 40 both in the common coordinate system as information and matches these with each other to create the 3D HD map 50 with annotations in the matching unit 5 and output it via the annotated map generation unit 6, where the latter unit may also be part of the matching unit 5.

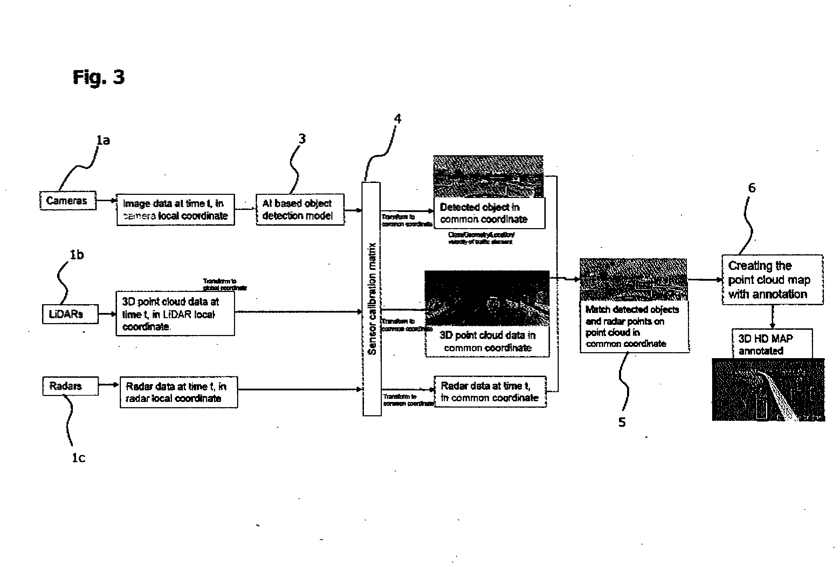

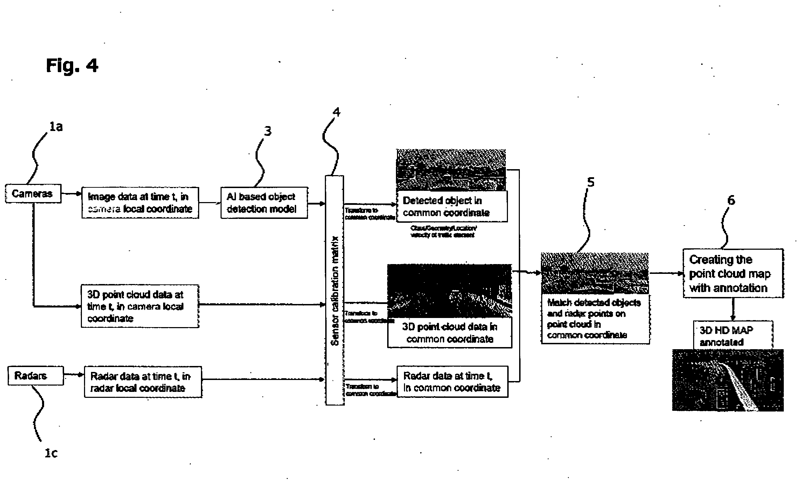

Figure 3 shows a part of the process flow as included in Figure 2 and focused on the processing of the data, e.g. the data taken at a time point t. As explained before, the different recording units 1a to 1c, e.g. Camera(s) 1a, LiDAR(s) 1b and/or Radar(s) 1c provide data. In Figure 3 the camera(s) 1a provide image data at different time points, here in this example at time point t, in a local camera coordinate system. Same for the LiDAR(s) 1b which provide 3D point cloud data at time t in a LiDAR coordinate system and the Radar(s) 1c the radar data in a radar coordinate system. Such (recorded environment/surrounding) data, in case of the image data previously processed to detect objects therein as described before, are input into the environment data calibration unit 4 which uses a calibration matrix or other corresponding methods to transform the data into a common coordinate system, such as the World coordinate system or the like. Afterwards the above described different origin environment data are available in a common coordinate system and matching processing can be performed using said common-coordinate environment data. Figure 4 shows a similar processing where, alternatively, point cloud data are provided by a camera unit, not a LiDAR unit, where a combination of both sources, image and LiDAR, is also an option encompassed by the present disclosure. In this context it is further noted that these examples are examples not limiting the disclosure and if other sources of recording units, such as a Radar unit or the like, can provide the point cloud data, these units could be used alternatively or additionally.

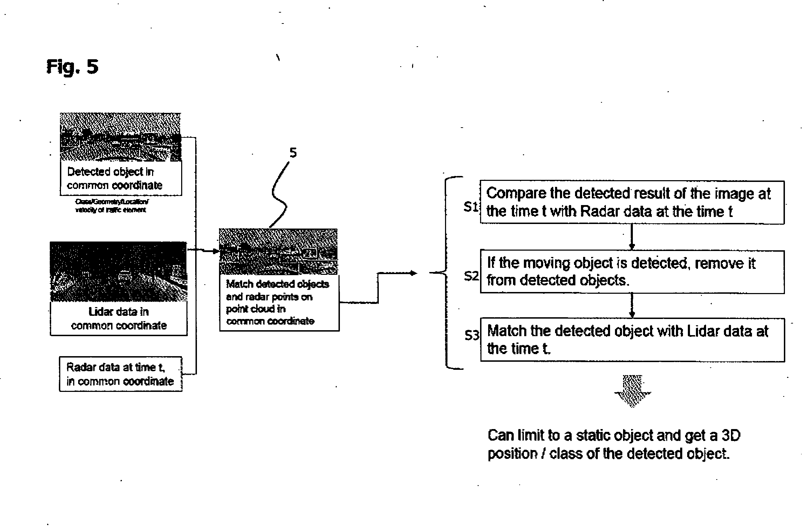

The matching is performed as described in connection with the Figure 2 above while Figure 5 especially shows steps of a sub-matching process in which moving/non-static and static objects are differentiated. In order to do so, the steps S1 to S2 are applied which firstly compare object detection results at the time point t to compare the with the radar data of time t. if S1 indicates moving objects, they will be omitted from the detect object data or at least not further processed.

Step 3 then shows the above described procedural step performed in the matching unit 5 where point cloud data and detected object data are merged with each other. This allows creating in unit 5 or unit 6 (they can be a combined unit) the annotated 3D HD map 50.

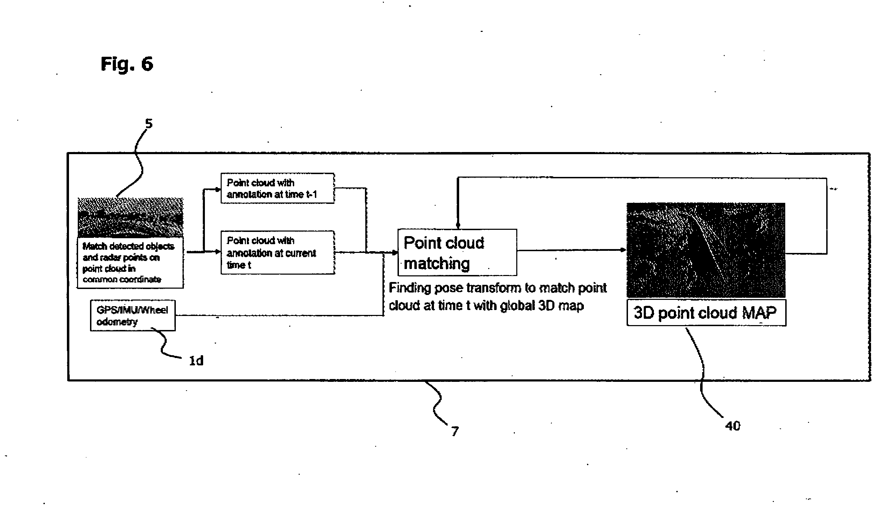

Further Figure 6 shows another excerpt of the general processing as shown by Figs. 2 to 4, where the matching between the point cloud data and the image-based object detected data (detected objects) is shown. The excerpt of the processing as shown in Fig. 6 concretely shows the creating of the 3D point cloud map 40 which has been explained before.

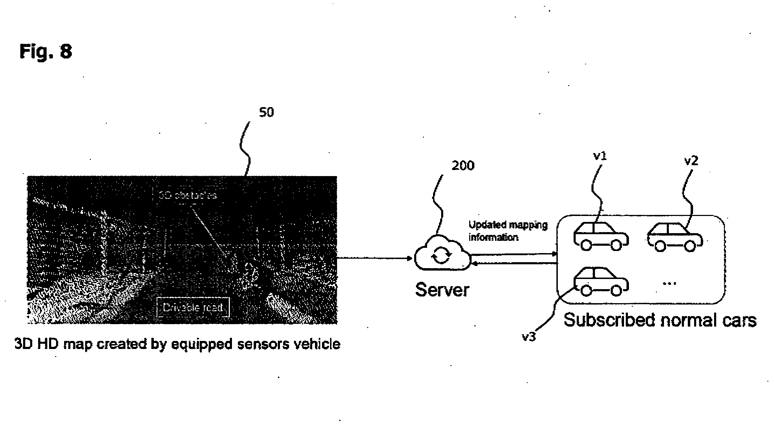

Finally, Figure 8 shows a possible application scenario where an apparatus 100 as disclosed herein is mounted to a vehicle driving on a road and processing the environment as described above to create the 3D HD map 50. This map 50 is then sent to a server 200 and which can provide such map data to other vehicles v1 to v3, even in (near) real-time.

The present disclosure thus improves the generation of 3D maps which have annotations automatedly generated by the above explained apparatus 100.

It is furthermore noted that examples of the present disclosure may take the form of an entirely hardware example, an entirely software example (including firmware, resident software, micro-code, etc.), or an example combining software and hardware aspects. Furthermore, examples of the present disclosure may take the form of a computer program product on a computer-readable medium having computer-executable program code embodied in the medium.

It should be noted that arrows may be used in drawings to represent communication, transfer, or other activity involving two or more entities. Doubleended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects/examples are described hereinabove with reference to flowchart illustrations and/or block diagrams of methods and apparatuses and the like. It will be understood that each block of the flowchart illustrations and/or block diagrams, and/or combinations of blocks in the flowchart illustrations and/or block diagrams can be implemented by computer-executable program code.

The computer executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

Communication networks generally may include public and/or private networks; may include local-area, wide-area, metropolitan-area, storage, and/or other types of networks; and may employ communication technologies including, but in no way limited to, analogue technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analogue technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the examples are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this disclosure, that different examples or aspects described herein may be combined to form other examples.
100 Map generation apparatus 50 3D HD-map
1 surrounding recording sensor device
1a - 1c Recording units
1a camera unit(s)
1b lidar unit(s)
1c radar unit(s)
1d odometry
2 time synchronization unit
3 object detection unit
4 environment data calibration unit
5 matching unit
6 annotated map generation unit
7 3D point cloud map generation unit

## Claims

1. A map generation apparatus, in particular for generating a 3D HD-map, comprising:
- a surrounding recording sensor device configured to obtain recorded surrounding data, the surrounding recording sensor device including recording units including at least one camera unit configured to record image data as recorded surrounding data and further including at least one of:
- at least one radar unit configured to record radar data of the surrounding as recorded surrounding data, at least one camera unit configured to record 3D point cloud data of the surrounding as recorded surrounding data, and/or at least one lidar unit configured to record 3D point cloud data of the surrounding as recorded surrounding data,
- an object detection unit configured to receive recorded image data and to perform object detection in the image data to detect objects,
- an environment data calibration unit configured to receive the recorded surrounding data of the different recording units for a time point t and to transform the received recorded surrounding data of a time point t of the different recording units to a common coordinate system,
- a matching unit configured to match detected objects with the recorded surrounding data of a time point t of the different recording units in the common coordinate system.

2. The map generation apparatus according to claim 1, wherein
the recording units include at least two camera units, the one camera unit configured to record image data as recorded surrounding data in a local camera unit coordinate system and the other camera unit configured to record 3D point cloud data in a local camera unit coordinate system as recorded surrounding data.

3. The map generation apparatus according to claim 1 or 2, wherein the recording units include at least one camera unit configured to record image data as recorded surrounding data in a local camera unit coordinate system and at least one lidar unit configured to record 3D point cloud data in a local lidar unit coordinate system as recorded surrounding data.

4. The map generation apparatus according to at least one of the preceding claims, preferably claim 2 or 3, wherein the recording units further include at least one radar unit configured to record radar data of the surrounding in a local radar unit coordinate system as recorded surrounding data.

5. The map generation apparatus according to at least one of the preceding claims, wherein the matching unit compares the detected objects with the recorded surrounding data from other recording units in the common coordinate system; preferably, the matching unit compares detected objects at time point t in the common coordinate system with radar data at time point t in the common coordinate system, removes detected objects which are not static from the detected objects, and matches static detected objects at time point t in the common coordinate system with a 3D point cloud map.

6. The map generation apparatus according to claim 5, wherein a 3D point cloud map is generated by a 3D point cloud map generation unit which uses point cloud 3D data at the time point t, the time point t-1 and localization data to perform calculation of finding a pose to match 3D point cloud data with a global 3D map.

7. The map generation apparatus according to at least one of the preceding claims, wherein the object detection unit includes a trained artificial intelligence model trained for detecting objects in image data.

8. The map generation apparatus according to at least one of the preceding claims, wherein the environment data calibration unit configured to receive the recorded surrounding data from the different recording units of the surrounding recording sensor device repeatedly and for a same time point t, and
the map generation apparatus further comprising a time synchronization unit configured to synchronize the triggering of the different recording units of the surrounding recording sensor device.

9. System including the map generation apparatus according to at least one of the preceding claims and a vehicle, wherein the map generation apparatus being mounted on/in the vehicle.

10. Computer-implemented method for generating a map, in particular a 3D HD-map, comprising the steps of:
- obtaining an image data at a time point t by a camera unit,
- obtaining 3D point cloud data at the time point t by a camera unit and/or a lidar unit,
- obtaining radar data at the time point t by a radar unit,
- performing a detection processing for detecting an object in the obtained image data,
- performing transformation processing to transform the image data, the 3D point cloud data and the radar data from a local coordinate system into a common coordinate system,
- matching the detected objects with 3D point cloud data in the common coordinate system.

11. The method of claim 10, wherein in a further step the radar data in the common coordinate system and detected objects are compared and if a detected objected is found to be not static, it is removed from the detected objects.

12. The method of at least one of claims 10 to 11, wherein a 3D point cloud map is generated by matching 3D point cloud data of a time point t and of a time point t-1.

13. The method of at least one of claims 10 to 12, wherein the time point to repeatedly obtain image data, lidar data, and/or radar data is synchronized by a trigger signal issued by a time synchronization unit.

14. The method of at least one of claims 10 to 13, wherein the 3D annotated map is uploaded to a remote server.

15. The method of at least one of claims 10 to 14 performed by the apparatus according to at least one of claims 1 to 8.
